# EUROPEAN PATENT APPLICATION

(11) **EP 2 719 935 A1**
(43) Date of publication of application: **16.04.2014**
(21) Application number: 13188053.6
(22) Date of filing: 10.10.2013
(51) Int. Cl.: F16L 33/08

(54) **Fastening device**

(30) Priority: 10.10.2012 GB 201218184
(71) Applicant: Cresco Industrial Supplies Ltd, Doncaster DN11 8QA (GB)
(72) Inventor: Gooding, David, Doncaster, South Yorkshire DN11 8QA (GB)
(74) Representative: Franks & Co Limited

(57) **Abstract**

A fastening device comprising a band; a housing secured to one end of the band; a bridging member secured below the housing; a drive screw located in the housing; a series of spaced engagement means formed on or in the band and extending from its free end towards the housing; teeth for engagement by the drive screw being formed in the band adjacent the housing; and a connection member attached to the housing and having a hook - like formation to engage one of the engagement means formed in the band, whereby the free end of the band lies inwardly of that part of the band extending to the housing.

## Description

### Field of the Invention

The present invention relates to fastening devices and is particularly concerned with fastening devices to secure such as a flexible pipe or circular member to a nozzle inserted in the circular member, to connect two flexible circular member to a bridging member or to connect one flexible circular member of a larger diameter to a second flexible member of a small diameter inserted therein.

### Background of the Invention

Such fastening means are frequently referred to as "worm drive clips", where a band of an appropriate metal or plastics has a housing at one end in which a worm device screw is located, and the band towards its other end has a series of spaced teeth or other formations. With the band bent into a generally circular configuration, its free end can be inserted into the housing for the teeth to be engaged by the worm drive screw, and rotating the screw draws the band through the housing to reduce the band diameter, and tighten it on to a pipe or the like on which the fastening device is positioned.

Such fastening devices are produced in sizes specifically suited to a particular pipe or the like diameter, or a small range of diameters. The act of tightening the band around the pipe or the like causes the free end of the band to project beyond the housing, but because of the size of the device in comparison with the diameter of the pipe, the extent to which the free end of the band projects beyond the housing is relatively small, and does not hinder the use or positioning of the device.

If fastening devices of the type defined were to be provided for large diameter pipes or the like, it would be distinctly advantageous if one fastening device would be effective for a wide variety of pipe or the like diameters. The difficulty is that when applied to a pipe or the like considerably smaller than the maximum diameter of pipe or the like that one device can accommodate, it results in a relatively extensive length of band extending beyond the housing after tightening, that can interfere with the use of the device, and cropping the band to reduce the length that produces from the housing is not practical in that it prevents the subsequent use of a device of a large pipe or the like diameter and for which the device was originally designed.

The object of the invention is to provide a fastening device that avoids the disadvantages mentioned above.

### Summary of the Invention

According to the present invention, a fastening device comprises a band, a housing secured to one end of the band, a drive screw located in the housing, a series of spaced engagement means formed on or in the band and extending from its free end towards the housing, teeth for engagement by the drive screw being formed in the band adjacent the housing, and a connection member attached to the housing and having a hook-like formation to engage one of the engagement means formed in the band, the free end of the band lying inwardly of that part of the band extending to the housing. Preferably, the drive screw is a worm drive screw.

The engagement means in the band may be through-holes, and the band may be bent at the end of each through-hole, to facilitate engagement of a hole by the hook-like formation on the connection member attached to the housing.

The connection member may be secured such as by a rivet or by tack welding to a bridging member secured below the housing, to provide a space between the housing and the connection member, for the passage of the end of the band bearing the teeth.

Thus, at the point that a fastening point of the invention is applied to a pipe or the like, the teeth at one end of the band are in engagement with the drive screw, the band caused to take a circular configuration around a pipe or the like with the free end of the band positioned inwardly of the length of band extending to the screw housing, and the band pulled to a finger tight position by pulling the connection member so that its hook engages an appropriate engagement means (through-hole) in the band.

The feed screw can then be operated to cause the band to tighten around the pipe, by drawing the toothed section of the band through the housing, but by having the free end of the band positioned inwardly, and by having but the band in a finger tight position, the amount of band extending beyond the housing after achieving a tight connection is minimal, and not significantly greater than is the case with convention fastening devices intended for small diameter pipes.

To maintain the section of band positioned inwardly in position, side members can be formed at the edges of the free end of the band, to position the free end of the band in alignment with that part of the band overlying it.

### Detailed Description of the Embodiments

One embodiment of the invention will now be illustrated in the accompanying drawings, in which:

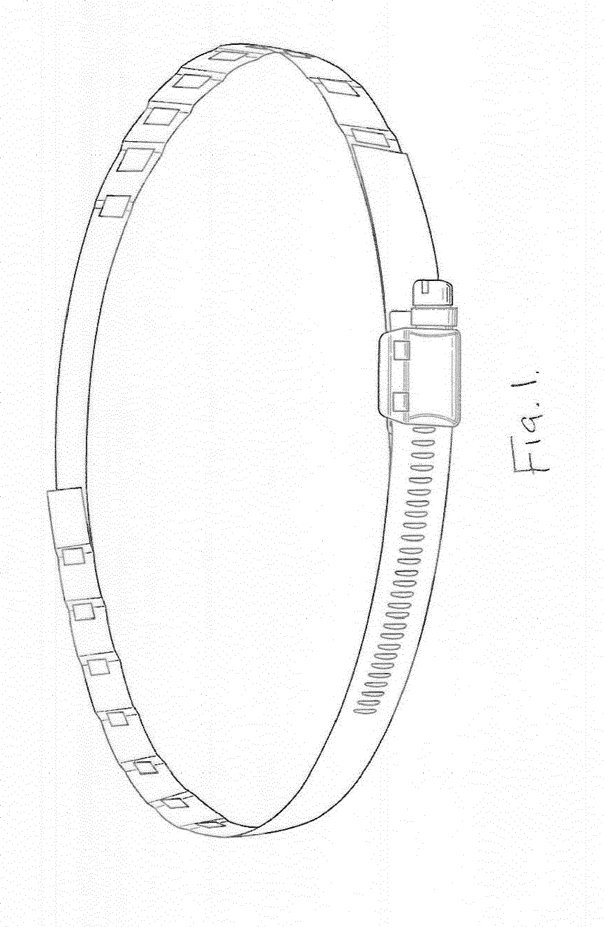

Figure 1 is an external perspective view of a fastening device in accordance with the invention;

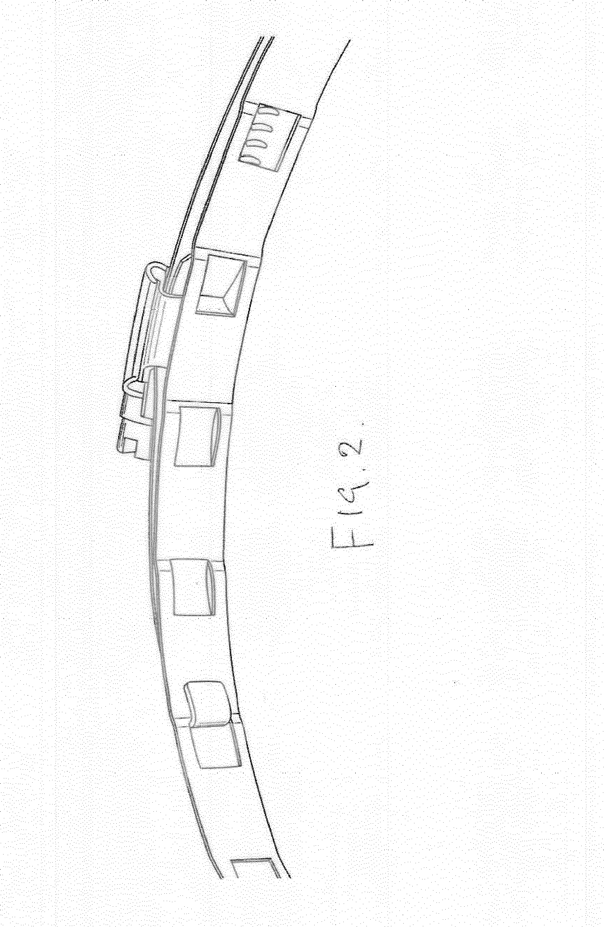

Figure 2 is an internal perspective view of part of the fastening device of Figure 1, in a connected condition;

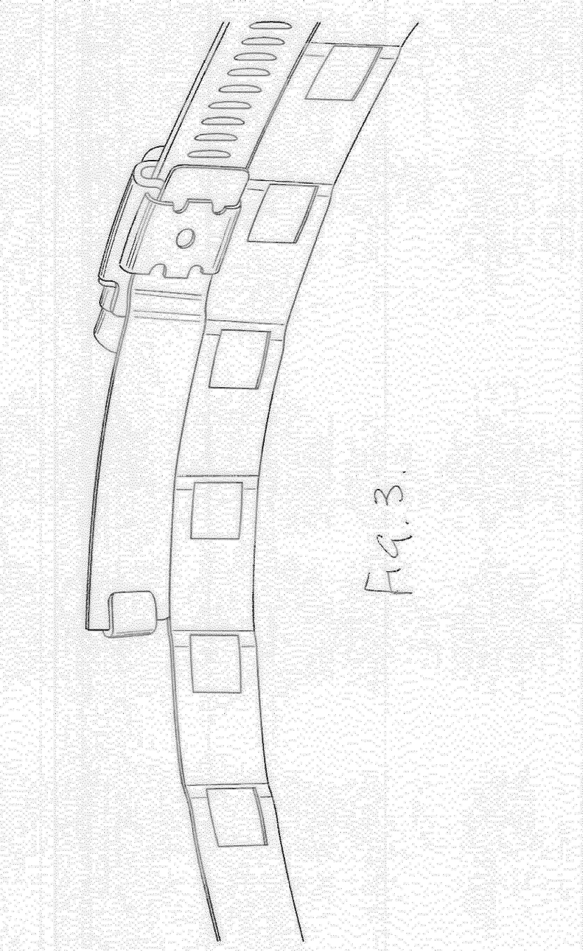

Figure 3 corresponds to Figure 2, but shows the fastening device in a disconnected condition;

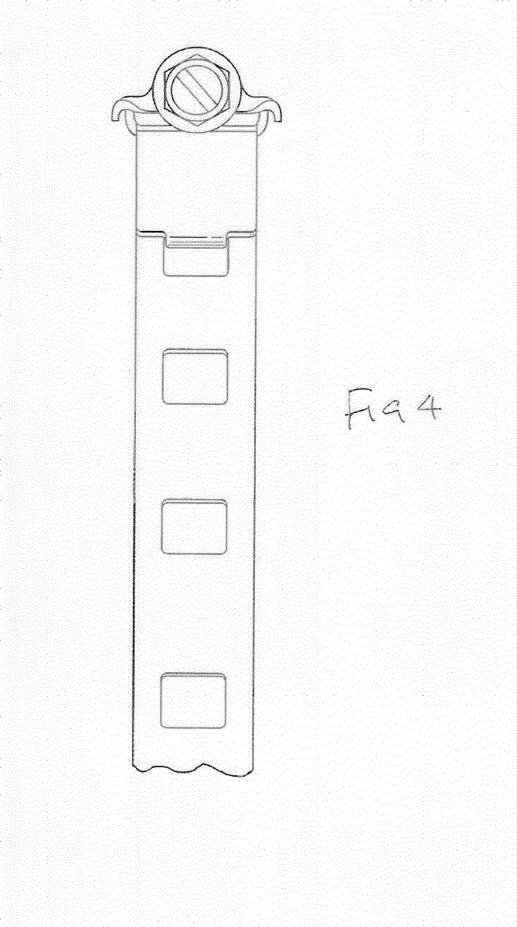

Figure 4 is an end elevation of part of the fastening device of Figure 1; and

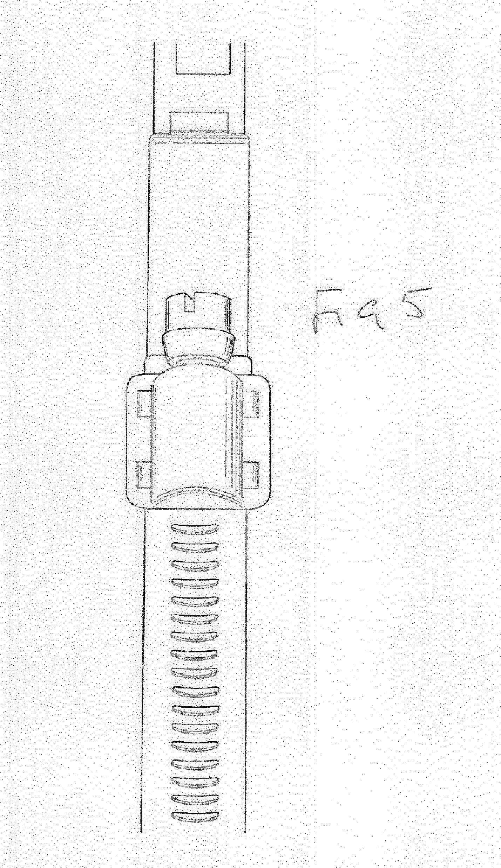

Figure 5 is a side elevation of part of the fastening device of Figure 1.

## Claims

1. A fastening device comprising:
a. a band;
b. a housing secured to one end of the band;
c. a bridging member secured below the housing;
d. a drive screw located in the housing;
e. a series of spaced engagement means formed on or in the band and extending from its free end towards the housing;
f. teeth for engagement by the drive screw being formed in the band adjacent the housing and
g. a connection member attached to the housing and having a hook - like formation to engage one of the engagement means formed in the band,
whereby the free end of the band lies inwardly of that part of the band extending to the housing.

2. A fastening device of claim 1, wherein the drive screw is a worm drive screw.

3. A fastening device of claims 1-2, wherein the engagement means in the band are through-holes and the band is bent at the end of each through-hole and the through-holes are engaged by the hook-like formation on the connection member attached to the housing.

4. A fastening device of claim 1-3, wherein the connection member is secured by a rivet or by tack welding to a bridging member secured below the housing.

## Amended claims

### Amended claims in accordance with Rule 137(2) EPC.

**1.** A fastening device comprising:
a. a band;
b. a housing secured to one end of the band;
c. a bridging member secured below the housing;
d. a drive screw located in the housing;
e. a series of spaced engagement means formed on or in the band and extending from its free end towards the housing;
f. teeth for engagement by the drive screw being formed in the band adjacent the housing and
g. a connection member attached to the housing and having a hook - like formation to engage one of the engagement means formed in the band,
whereby the free end of the band lies inwardly of that part of the band extending to the housing, wherein the drive screw is a worm drive screw, and wherein the engagement means in the band are through-holes and the band is bent at the end of each through-hole and the through-holes are engaged by the hook-like formation on the connection member attached to the housing, **characterised by** that the connection member is secured by a rivet or by tack welding to a bridging member secured below the housing.
